# EUROPÄISCHE PATENTSCHRIFT

(11) **EP 1 616 142 B1**
(45) Veröffentlichungstag und Bekanntmachung des Hinweises auf die Patenterteilung: **17.06.2009**
(21) Anmeldenummer: 04722242.7
(22) Anmeldetag: 22.03.2004
(51) Int. Cl.: F28F 9/02, F28F 21/06, F02B 29/04

(54) **SAMMELKASTEN, WÄRMEÜBERTRAGER UND VERFAHREN ZUR HERSTELLUNG EINES SAMMELKASTENS**
COLLECTING TANK, HEAT EXCHANGER, AND METHOD FOR PRODUCING A COLLECTING TANK
RESERVOIR ACCUMULATEUR, ECHANGEUR THERMIQUE ET PROCEDE POUR REALISER UN RESERVOIR ACCUMULATEUR

(30) Priorität: 10.04.2003 DE 10316754
(43) Veröffentlichungstag der Anmeldung: 18.01.2006
(73) Patentinhaber: Behr GmbH & Co. KG, 70469 Stuttgart (DE)
(72) Erfinder: KÄMMLER, Georg, 70439 Stuttgart (DE)
(74) Vertreter: Grauel, Andreas
(86) Internationale Anmeldenummer: PCT/EP2004/002968
(87) Internationale Veröffentlichungsnummer: WO 2004/090455

(56) Entgegenhaltungen:
- EP-A- 1 273 868
- DE-A- 4 041 671
- FR-A- 2 614 980
- FR-A- 2 742 533
- GB-A- 2 082 312
- US-B1- 6 315 036

## Beschreibung

Die Erfindung betrifft einen Sammelkasten, insbesondere Ladeluft- oder Kühlmittelkasten für ein Kraftfahrzeug, gemäß dem Oberbegriff des Anspruchs 1, einen Wärmeübertrager gemäß dem Oberbegriff des Anspruchs 6 sowie ein Verfahren zur Herstellung eines Sammelkastens.

Herkömmliche, spritzgegossene Kunststoff-Ladeluftkästen, die hohen Beanspruchungen, nämlich hohen Temperaturen und hohen Drücken, ausgesetzt sind, sind häufig in Bereichen mit besonders hohen Beanspruchungen mit Zugankern ausgestaltet, die eine Verbindung von einer zur anderen Wand des Ladeluftkastens bilden. Diese werden in der Regel bei der Herstellungsform berücksichtigt und gleich mit dem Ladeluftkasten aus dem gleichen Material spritzgegossen. Ein derartiger Ladeluftkasten lässt jedoch noch Wünsche offen.

So ist aus der EP 0 641 985 B1 ein Wärmetauscherbehälter mit mehreren getrennt vom Wärmetauscherbehälter ausgebildeten und in Vertiefungen, die sich zwischen gegenüberliegenden Wänden des Wärmetauscherbehälters erstrecken, nach der Fertigstellung des Wärmetauscherbehälters eingesetzte Versteifungsstreben bekannt. Hierbei ist jedoch die Herstellung relativ aufwändig, so dass auch ein solcher Wärmetauscherbehälter noch Wünsche offen lässt.

In der DE 40 41 671 A1 ist ein Wärmetauscher mit einem Rippenrohrblock, dessen Rohre mit ihren Enden durch Öffnungen eines Rohrbodens hindurch gesteckt und im hindurch gesteckten Endbereich aufgeweitet sind, offenbart. Der Wärmetauscher weist zumindest einen, auf den Rohrboden dicht aufgesetzten und mit einer Zugankerverbindung befestigten Wärmetauscherkasten auf.

Es ist Aufgabe der Erfindung, einen verbesserten Sammelkasten und/oder Wärmeübertrager zur Verfügung zu stellen.

Diese Aufgabe wird gelöst durch einen Sammelkasten mit den Merkmalen des Anspruchs 1 und durch einen Wärmeübertrager mit den Merkmalen des Anspruchs 6. Vorteilhafte Ausgestaltungen sind Gegenstand der Unteransprüche.

Erfindungsgemäß weist der Zuganker, der einstückig mit dem Sammelkasten bevorzugt aus Kunststoff ausgebildet oder hiermit zumindest fest verbunden ist, insbesondere mittels Eingießens, eine Einlage auf. Diese wird insbesondere vor dem Spritzgießen in das Werkzeug eingelegt. Prinzipiell ist es auch möglich, den Zuganker in mitgespritzte Öffnungen einzuschieben und anschließend zu verschweißen, wodurch auch eine stoffschlüssige Verbindung möglich ist, oder mittels eines federnden Hinterschnittes, wie beispielsweise einer Rastnase, zu befestigen, wodurch eine kraftschlüssige Verbindung realisierbar ist. Für eine Kühlung mittels eines durchströmenden Fluids ist die Einlage hohl.

Vorzugsweise handelt es sich bei der Einlage um ein Verstärkungselement und/oder ein Kühlelement. Letzteres ist insbesondere bei den hohen Temperaturen ausgesetzten Ladeluftkästen sinnvoll, da so die Material-Temperaturen in den am stärksten belasteten Bereichen gezielt abgesenkt werden können. Somit wird die oxidative Alterung des Kunststoffes verlangsamt, wodurch die Lebensdauer steigt. Ferner können auch billigere Kunststoffe verwendet werden oder aber die Verwendung von Kunststoffen anstelle von Aluminium wird in bestimmten Fällen überhaupt erst möglich.

Bevorzugt ist die Einlage ein Metalleinlegeteil, ein Metallband, ein Metallrohr, ein Faserwerkstoff-Einlegeteil, ein Faserwerkstoff-Band und/oder eine Faser, wobei es sich beim Faserwerkstoff beziehungsweise bei der Faser insbesondere um Glas- oder Kohlefasern handelt.

Vorzugsweise ist eine Ummantelung mit einem Kunststoff vorgesehen. Dies gilt insbesondere für die Variante, bei der der Zuganker nach dem Spritzgie Ummantelung, die insbesondere aus einem Kunststoff-Material besteht, das sich mit dem Kunststoff-Material des Sammelkastens problemlos verbinden lässt, ist eine sehr gute, bevorzugt stoffschlüssige Verbindung der Kunststoff-Materialien möglich.

Insbesondere ist die Einlage mit einem im wesentlichen kreisförmigen oder ovalen Querschnitt, ausgebildet. Dabei können auch mehrere dünne Röhrchen nebeneinander angeordnet sein, getrennt oder einstückig ausgebildet.

Ferner kann die Einlage aus einem gut wärmeleitenden Material bestehen, wie zum Beispiel Kupfer oder Aluminium. Dies trifft insbesondere auch auf die zuvor genannten, hohl ausgebildete Einlagen zu.

Vorzugsweise ragt die Einlage über die Außenseite des Sammelkastens nach außen und/oder endet in einem Vorsprung des Sammelkastens, insbesondere in einer Rippe desselben. Wenn die Einlage in einer Rippe o.ä. endet, so kann eine sehr gute Verankerung erfolgen, da die der Umgebungstemperatur ausgesetzten Rippen temperaturbedingt auch währen des Fahrbetriebs einen hohen E-Modul aufweisen.

Gemäß einer bevorzugten Ausgestaltung wird ein erfindungsgemäßer Sammelkasten in einem Wärmeübertrager eingesetzt, wobei Wärmeübertragungsrohre in den Sammelkasten münden, Insbesondere weist der Wärmeübertrager Wellrippen für eine Vergrößerung einer wärmeübertragenden Oberfläche auf, wobei zum Beispiel die Wellrippen mit den Wärmeübertragungsrohren verlötet sind. Solche Wärmeübertrager sind insbesondere in Kraftfahrzeugen einsetzbar.

Es besteht überdies die Möglichkeit, den erfindungsgemäßen Sammelkasten in einem beliebigen Wärmeübertrager allein oder in Verbindung mit zumindest einem weiteren Sammelkasten zu verwenden, wobei der zumindest eine weitere Sammelkasten ebenfalls ein erfindungsgemäßer Sammelkasten oder ein Sammelkasten nach dem Stand der Technik sein kann.

Im folgenden wird die Erfindung anhand mehrerer Ausführungsbeispiele, teilweise unter Bezugnahme auf die beiliegende Zeichnung im einzelnen erläutert. Es zeigen:

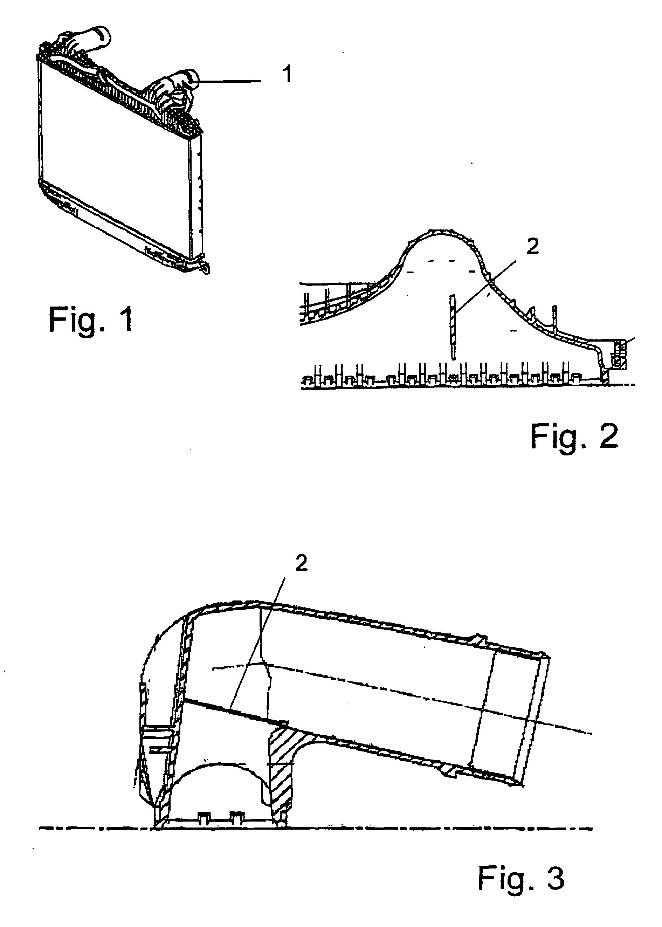

- Fig 1: einen Wärmetauscher mit zwei Sammelkästen gemäß einem ersten Ausführungsbeispiel,
- Fig. 2: einen Schnitt quer durch einen der Sammelkästen von Fig. 1,
- Fig. 3: einen Schnitt längs durch den Sammelkasten von Fig. 2,
- Fig. 4: einen Schnitt längs durch einen Sammelkasten gemäß einem dritten Ausführungsbeispiel, und
- Fig. 5: einen Schnitt längs durch einen Sammelkasten gemäß einem vierten Ausführungsbeispiel.

Ein erfindungsgemäßer, als Kühlmittelkasten ausgebildeter Sammelkasten 1 einer Klimaanlage eines Kraftfahrzeugs besteht aus mit Glasfasern verstärktem Polyamid mit einem Zuganker 2, der eine Einlage aus einem Glasfaserband aufweisen. Zur Herstellung des Kühlmittelkastens wird einem in Granulatform vorliegenden, mit Glasfasern versetzten Polyamid zur Beschleunigung der Kristallisation ein chemisches, exotherm wirkendes Treibmittel in Granulatform zugegeben, wobei das Treibmittel mit Polyäthylen ummantelt ist, die Granulate miteinander vermischt und einer Spritzgießmaschine zugeführt.

In einer Schnecke der Spritzgießmaschine erfolgt auf bekannte Weise eine Plastifizierung der Granulate zu einer Kunststoffmasse infolge von Wärme (240-290°C) und des Druckes. Diese plastische Kunststoffmasse wird in ein Spritzgusswerkzeug gefüllt, in das verstärkende Elemente, vorliegend bandartig angeordnete Glasfasern, die mit Polyamid ummantelt sind, an den Stellen, an denen Zuganker 2 vorgesehen sind, automatisch eingelegt. Dabei sind die verstärkenden Elemente vorgewärmt. Aufgrund hohen Temperaturen reagiert das Treibmittel unter Abgabe von Wärmeenergie unter Bildung von CO₂. Das Treibmittel bzw. das entstandene CO₂ bewirkt ein schnelleres Ausfüllen des Spritzgusswerkzeuges, da ein geringerer Volumenschwund der Kunststoffmasse beim Abkühlen auftritt, so dass keine oder nur eine minimale Menge plastifizierter Kunststoffmasse zum Ausgleich des Volumenschwunds nachgeschoben werden muss. Das eingespritzte Polyamid verbindet sich stoffschlüssig mit dem Polyamid der Glasfaserummantelung, so dass einstückig in den Kühlmittelkasten integrierte Zuganker 2 ausgebildet sind, die mit Glasfasern entsprechend den Anforderungen verstärkt sind.

Im Spritzgusswerkzeug verbleibt die Kunststoffmasse bis die Form ausgefüllt und eine gewisse Kristallisation und Relaxation erfolgt ist. Anschließend wird das Spritzgusswerkzeug geöffnet, der Kühlmittelkasten entnommen und sofort ein Spannrahmen eingesetzt, um ein Einfallen des Kühlmittelkastens zu verhindern. Gemäß dem erfindungsgemäßen Verfahren hat der Kühlmittelkasten bei der Entnahme eine Oberflächentemperatur von ca. 120°C. Dabei kann der Spannrahmen gekühlt werden.

Zur Weiterverarbeitung wird um einen Aluminium-Kastenboden eine Gummischnur-Dichtung gelegt, der Spannrahmen aus dem Kühlmittelkasten entfernt, möglichst schnell, d.h. innerhalb von ca. 30-60 Sekunden, der Kühlmittelkasten auf den Aluminium-Kastenboden mit Gummischnur-Dichtung gelegt und in einer Presse verpresst.

Gemäß einem zweiten, nicht in der Figur dargestellten Ausführungsbeispiel werden für einen Ladeluftkasten als Einlage dünne Metallröhrchen, die zur Verstärkung und Kühlung der Zuganker vorgesehen sind, in das Spritzgusswerkzeug eingelegt und eingegossen, wobei die Enden der Metallröhrchen aus der Form ragen, so dass später ein Anschließen an einen Kühlmittelkreislauf möglich ist. Der Kühlmittelkühler ist in der Regel nahe dem Ladeluftkasten angeordnet und daher sind nur geringe Änderungen für einen bereichsweise, das heißt im Bereich der Zuganker, gekühlten Ladeluftkasten erforderlich.

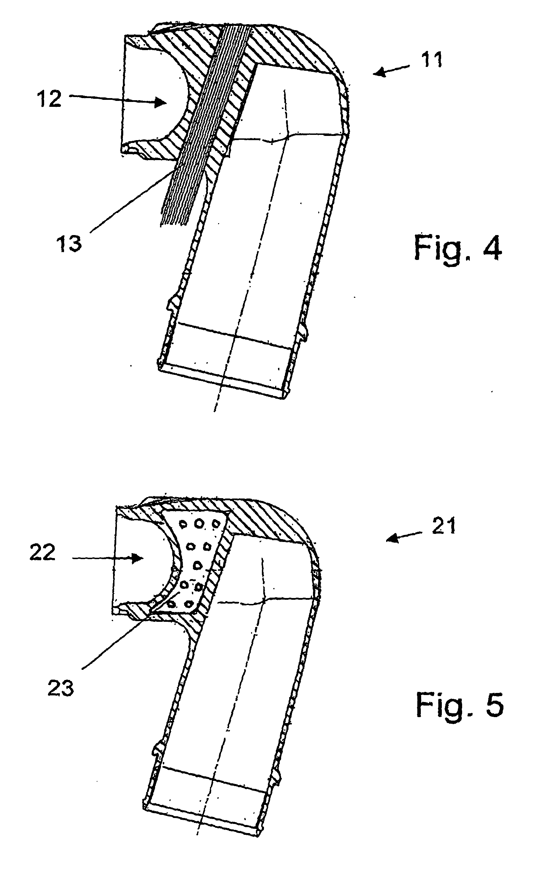

Fig. 4 zeigt einen Sammelkasten 11, vorliegend ein Ladeluftkasten, mit einem Zuganker 12, der durch ein eingespritztes Band (Tape) aus Aramidfasem als Einlage 13 verstärkt ist, d.h. die Ummantelung des Bandes besteht aus dem gleichen Werkstoff wie der Sammelkasten 11. Zur Herstellung wird das Band vollautomatisch durch das Spritzgießwerkzeug gefördert und vor dem Entformen abgeschert.

In Fig. 5 ist die Verwendung einer gelochten Geometrie als Einlage 23, vorliegend einer speziell geformten Platte aus Metall, die komplett vom Werkstoff des Sammelkastens 21 ummantelt ist, als Zuganker 22 dargestellt. Als Werkstoffe kommen neben Metallen auch andere höherfeste Werkstoffe in Frage. Für die Vorfixierung der gelochten Geometrie im Spritzgießwerkzeug kann diese Erhöhungen aufweisen, welche eine leichte Klemmung im Spritzgießwerkzeug ermöglichen.

## Patentansprüche

1. Sammelkasten, insbesondere Ladeluft- oder Kühlmittelkasten aus Kunststoff, mit mindestens einem in den Ladeluft- bzw. Kühlmittelkasten integrierten, einstückig oder fest verbundenen Zuganker (2; 12; 22), wobei der Zuganker (2; 12; 22) mindestens eine Einlage (13; 23) aufweist, **dadurch gekennzeichnet, dass** die Einlage von einem Fluid durchströmbar ausgebildet ist.

2. Sammelkasten nach Anspruch 1, **dadurch gekennzeichnet, dass** die Einlage (13; 23) ein Verstärkungselement und/oder ein Kühlelement ist.

3. Sammelkasten nach einem der vorhergehenden Ansprüche, **dadurch gekennzeichnet, dass** die Einlage hohl ausgebildet ist.

4. Sammelkasten nach einem der vorhergehenden Ansprüche, **dadurch gekennzeichnet, dass** die Einlage aus einem gut wärmeleitenden Material besteht.

5. Sammelkasten nach einem der vorhergehenden Ansprüche, **dadurch gekennzeichnet, dass** die Einlage über die Außenseite des Sammelkastens (1; 11; 21) nach außen ragt und/oder in einem Vorsprung des Sammelkastens (1;11;21) endet.

6. Wärmeübertrager, insbesondere Ladeluft- oder Kühlmittelkühler, für ein Kraftfahrzeug, mit Wärmeübertragungsrohren, die in zumindest einen Sammelkasten (1; 11; 21) münden, **dadurch gekennzeichnet, dass** zumindest ein Sammelkasten (1; 11; 21) nach einem der vorhergehenden Ansprüche ausgebildet ist.

7. Verfahren zur Herstellung eines Sammelkastens nach einem der Ansprüche 1 bis 5, **dadurch gekennzeichnet, dass** die Einlage (13; 23) bei der Herstellung des Sammelkastens (1; 11; 21) direkt mit eingespritzt und/oder nachträglich eingelegt und stoffschlüssig in denselben eingeschweißt ist.

## Claims

1. Collecting tank, in particular charge air or coolant tank, made of plastic, with at least one tie rod (2; 12; 22) integrated into or permanently joined to the charge air or coolant tank, the tie rod (2; 12; 22) comprising at least one insert (13; 23), **characterised in that** the insert is designed such that a fluid can flow through it.

2. Collecting tank according to claim 1, **characterised in that** the insert (13; 23) is a reinforcing element and/or a cooling element.

3. Collecting tank according to any of the preceding claims, **characterised in that** the insert is hollow.

4. Collecting tank according to any of the preceding claims, **characterised in that** the insert is made of Material with good thermal conductivity.

5. Collecting tank according to any of the preceding claims, **characterised in that** the insert protrudes outwards beyond the outside of the collecting tank (1; 11; 21) and/or terminates in a projection of the collecting tank (1; 11; 21).

6. Heat exchanger, in particular intercooler or coolant cooler, for a motor vehicle, with heat exchange tubes opening out into at least one collecting tank (1; 11; 21), **characterised in that** at least one collecting tank (1; 11; 21) is designed in accordance with any of the preceding claims.

7. Method for producing a collecting tank according to any of claims 1 to 5, **characterised in that** the insert (13; 23) is directly moulded in during the production of the collecting tank (1; 11; 21) and/or subsequently inserted and welded in using adhesive force.

## Revendications

1. Boite collectrice, en particulier boîte à air de suralimentation ou à liquide de refroidissement, en matière plastique, comprenant au moins un tirant (2 ; 12 ; 22) intégré à la boîte à air de suralimentation ou à liquide de refroidissement, d'un seul tenant ou bien solidement assemblé, où le tirant (2 ; 12 ; 22) présente au moins une couche intermédiaire (13 ; 23),
**caractérisée en ce que** la couche intermédiaire est configurée en pouvant être traversée par un fluide.

2. Boîte collectrice selon la revendication 1, **caractérisée en ce que** la couche intermédiaire (13 ; 23) est un élément de renfort et / ou un élément de refroidissement.

3. Boîte collectrice selon l'une ou l'autre des revendications précédentes, **caractérisée en ce que** la couche intermédiaire est configurée en étant creuse.

4. Boîte collectrice selon l'une quelconque des revendications précédentes, **caractérisée en ce que** la couche intermédiaire est réalisée dans un matériau bon conducteur de la chaleur.

5. Boîte collectrice selon l'une quelconque des revendications précédentes, **caractérisée en ce que** la couche intermédiaire dépasse, à l'extérieur, du côté extérieur de la boîte collectrice (1 ; 11 ; 21) et / ou se termine dans une partie saillante de la boîte collectrice (1 ; 11 ; 21).

6. Echangeur de chaleur, en particulier refroidisseur d'air de suralimentation ou radiateur à liquide de refroidissement, pour un véhicule automobile, comprenant des tubes de transfert de chaleur qui débouchent dans au moins une boîte collectrice (1 ; 11 ; 21), **caractérisé en ce qu'**au moins une boîte collectrice (1 ; 11 ; 21) est configurée selon l'une quelconque des revendications précédentes.

7. Procédé de fabrication d'une boîte collectrice selon l'une quelconque des revendications 1 à 5, **caractérisé en ce que** la couche intermédiaire (13 ; 23), lors de la fabrication de la boîte collectrice (1 ; 11 ; 21), est directement moulée par injection, avec ladite boîte collectrice, et / ou introduite ultérieurement, et soudée dans celle-ci par continuité de matière.
